# EUROPEAN PATENT APPLICATION

(11) **EP 4 778 705 A1**
(43) Date of publication of application: **22.07.2026**
(21) Application number: 26150547.3
(22) Date of filing: 07.01.2026
(51) Int. Cl.: B29C 65/02, B29C 65/78, B65B 9/20, B65B 41/18, B65B 59/00, B65B 9/02, B29C 53/48, B65B 59/02, B29L 31/00

(54) **PACKAGING MACHINE AND METHOD FOR PRODUCING SEALED PACKAGES FROM A WEB OF PACKAGING MATERIAL**

(30) Priority: 15.01.2025 IT 202500000561
(71) Applicant: Tetra Laval Holdings & Finance S.A., 1009 Pully (CH)
(72) Inventor: LAHRACHE, Achraf, 41123 Modena (IT); MARSELLA, Angelo, 41123 Modena (IT); COSTA, Stefano, 41123 Modena (IT); MELANDRI, Marco, 41123 Modena (IT)
(74) Representative: Tetra Pak Patent Attorneys

(57) **Abstract**

There is described a packaging machine (1) and a method for producing sealed packages from a web (3) of packaging material gradually folded and sealed into a tube (7) fed along a conveying path (P) with the steps of receiving a web width (WW) indicative of a width of the web (3) of packaging material; receiving an overlap width (OW) indicative of a width of an overlapping area (OA) of the tube (7) of packaging material; wherein the overlapping area (OA) comprises an area wherein a first edge (3A) of the web (3) of packaging material partially overlaps a second edge (3B) of the web (3) of packaging material; and adjusting a dimension of the overlapping area (OA) based on both the web width (OW) and the overlap width (OW).

## Description

### TECHNICAL FIELD

The present invention relates to a packaging method for producing sealed packages from a web of packaging material and to a packaging machine for producing sealed packages from a web of packaging material.

### BACKGROUND ART

As it is known, many liquid or pourable food products, such as for example pasteurized or long-life (UHT) milk, tomato sauce, wine, fruit juice are sold in packages made of sterilized packaging material. In some cases, a plurality of opening devices made of plastic material are injection-molded onto the planar web of sterilized packaging material.

Packages of this sort are normally produced with automatic packaging machines, which feed a web of packaging material through a sterilizing unit by means of known guiding elements (like for example rollers) for sterilizing the web of packaging material alternatively by means of chemical sterilization in a sterilizing bath (e.g. by applying a chemical sterilizing agent, such as a hydrogen peroxide solution) or by means of physical sterilization (e.g. by means of an electron beam).

The packaging machine further comprises a folding unit arranged downstream of the sterilizing unit, extending substantially vertically and arranged for folding the web of packaging material for producing a continuous tube. Inside the folding unit, the web of packaging material is folded from a continuous planar shape to a continuous tubular shape with a vertical axis.

The folding unit is provided with a plurality of folding rollers surrounding the tube and at least a mill roller having a number of recesses on the lateral wall thereof; each recess is configured to be engaged by the opening devices and is configured to prevent the opening devices from colliding with the folding rollers.

The web of packaging material with planar shape is folded into a cylinder that is successively subdivided into a plurality of pillow packs which are subjected to successive mechanical folding operations to obtain the finished sealed packages. The folding unit is preferably arranged within a fixed structure in which the web of packaging material is maintained in a sterile-air environment. The folding unit further comprises a number of folding devices placed in succession (one after the other): by interacting with the folding devices, opposite lateral portions (or edges) of the web of packaging material are placed one on top of the other so as to form the tube and so as to define an overlapping area.

The packaging machine comprises a sealing unit arranged downstream of the folding unit for sealing the overlapping edge portions of the web of packaging material to obtain a fluid-tight longitudinal seal in the tube. The tube is continuously filled with the pourable food product through a pour conduit, which partially extends inside the tube and is part of a filling circuit.

The tube is finally sent to a transverse forming and sealing unit, where the tube is gripped to transversely seal the tube and cut to form the pillow packs.

In the above-described packaging machines, the tube may exhibit variations in its diameter. Although functionally valid, a need is felt to monitor and control the width of the overlapping area, e.g. to facilitate the operation of the packaging machine and that of the mill roller so as to avoid any damage to the pre-applied opening devices.

### DISCLOSURE OF INVENTION

Therefore, an object of the present invention is to provide a method for producing sealed packages from a web of packaging material addressing the drawbacks of the state of the art and, in particular, being easy and economical to be implemented.

A further object of the present invention is to provide a packaging machine for producing sealed packages from a web of packaging material addressing the drawbacks of the state of the art and, in particular, being easy and economical to be manufactured.

According to the invention, there are provided a packaging method for producing sealed packages from a web of packaging material and a packaging machine for producing sealed packages from a web of packaging material according to the appended claims.

### BRIEF DESCRIPTION OF THE DRAWINGS

A non-limiting embodiment of the present invention will be described by way of example with reference to the accompanying drawings, in which:
- figure 1 is a perspective view, with parts removed for clarity, of a packaging machine for producing packages from a packaging material in accordance with the present invention;
- figure 2 is a schematic side view of the packaging machine of figure 1 with parts removed for clarity;

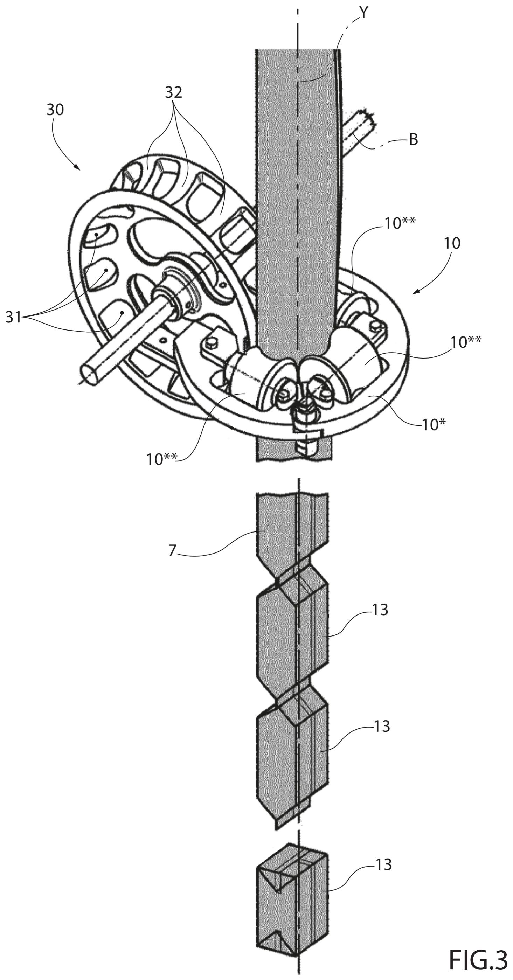

- figure 3 is a perspective view of a folding device of the packaging machine of figure 1 and of a tube of packaging material with parts removed for clarity;

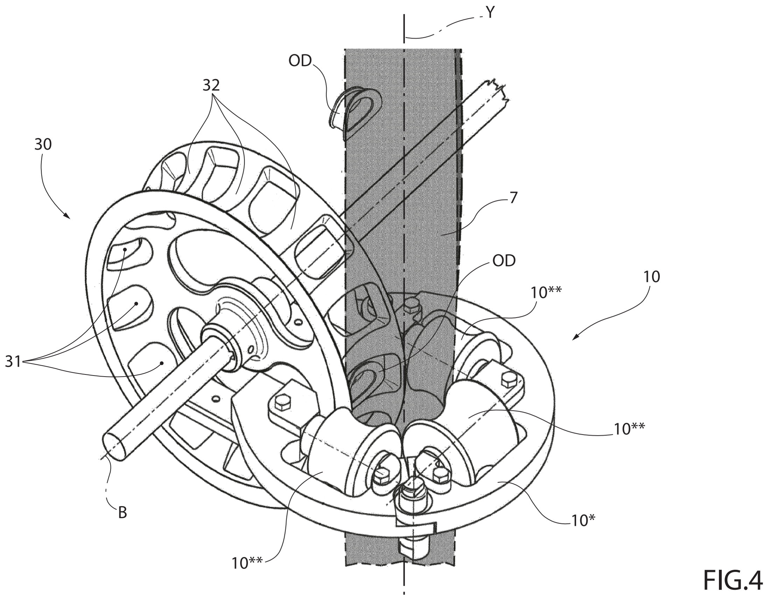

- figure 4 is an enlarged view of the folding device of figure 3;
- figure 5 is a plan view of a back roller of the packaging machine of figure 1 and of a tube of packaging material with parts removed for clarity;

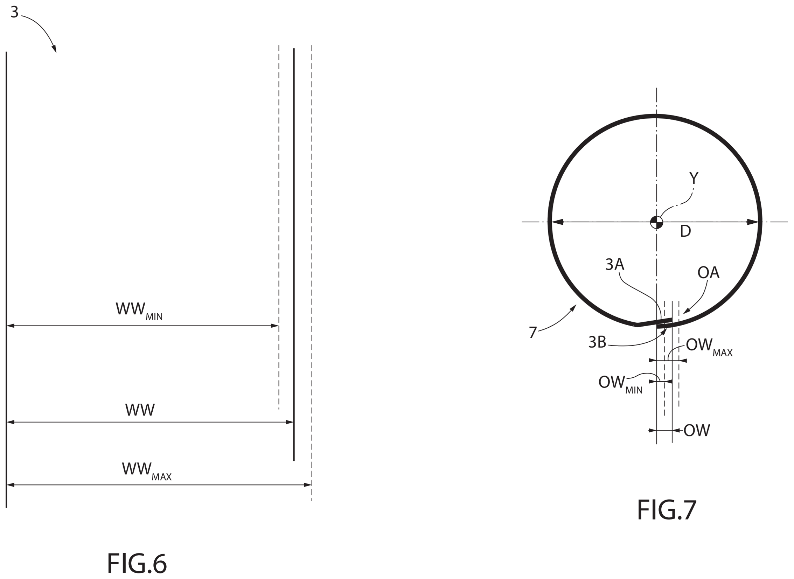

- figure 6 and 7 are plan views showing a web of packaging material and a tube of packaging material in the packaging machine of figure 1.

### BEST MODE FOR CARRYING OUT THE INVENTION

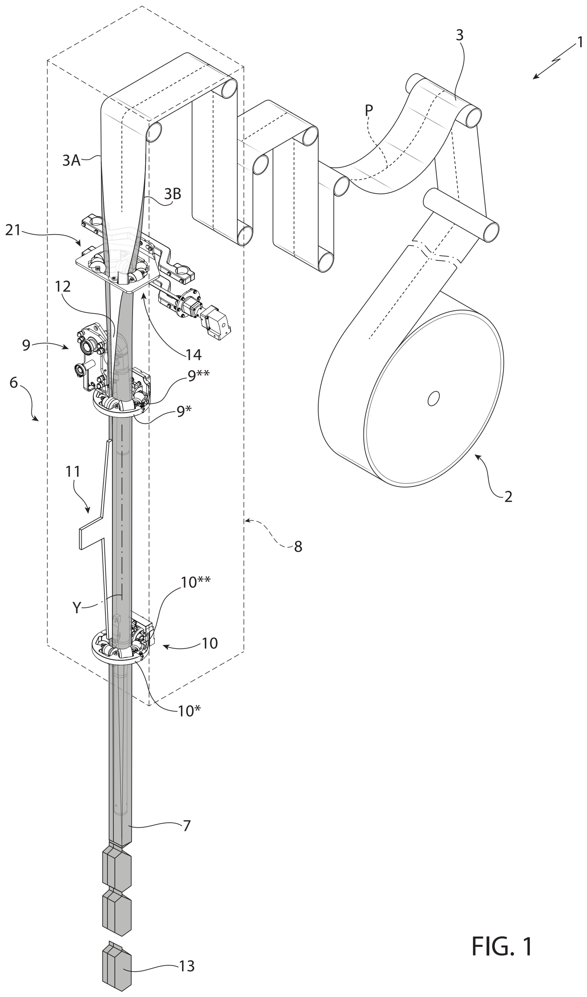

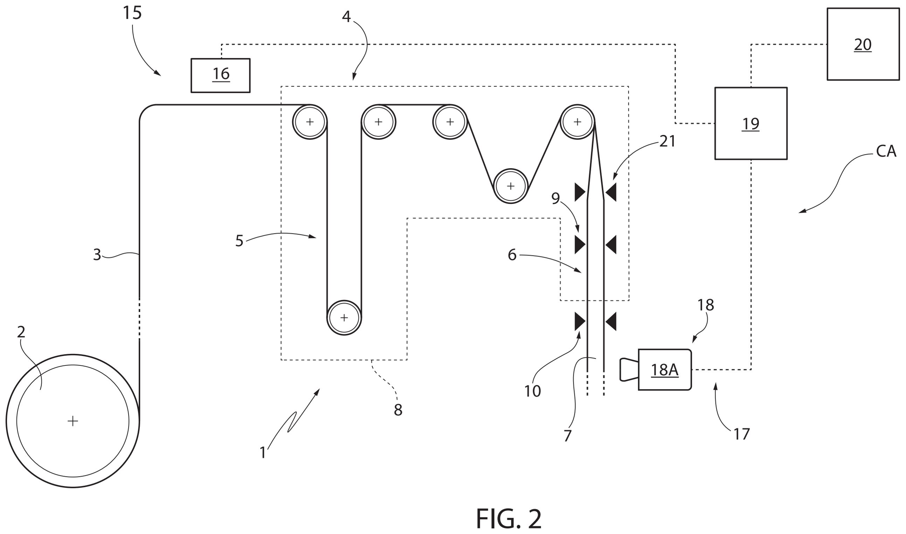

Figures 1 and 2 disclose, as a whole, a packaging machine 1 for continuously producing sealed packages, containing a pourable food product, such as for example pasteurized or long-life (UHT) milk, tomato sauce, wine, fruit juice. The sealed packages are obtained from packaging material unwound off a reel 2 and fed along a conveying path P. When unwound off the reel 2, the packaging material has the shape of a continuous planar web 3 of packaging material.

Typically, the packaging material has a multi-layer structure. More specifically, the packaging material may comprise at least a layer of fibrous material, such as e.g. a paper or cardboard layer, and at least two layers of heat-sealable material, e.g. polyethylene, interposing the layer of fibrous material in between one another. One of these two layers of heat-sealable material may define the inner face of the packages eventually contacting the pourable product.

According to some possible non-limiting embodiments, the packaging material may also comprise a layer of gas- and light-barrier material, e.g. aluminum foil or ethylene vinyl alcohol (EVOH) film, in particular being arranged between one of the layers of heat-sealable material and the layer of fibrous material. Preferentially, the packaging material may also comprise a further layer of heat-sealable material being interposed between the layer of gas- and light-barrier material and the layer of fibrous material.

The packaging machine 1 comprises direct injection molding devices (non shown) configured to apply a plurality of opening devices OD on the web 3 of packaging material. The direct injection molding devices are arranged downstream of reel 2 along the forming path P.

After being unwound off the reel 2, a plurality of opening devices OD are thus applied to the planar web 3 of packaging material. Advantageously, the opening devices OD are made of plastic material which is injection-molded onto the planar web 3 of packaging material.

In particular, the opening devices OD are molded onto the planar web 3 of packaging material along a substantially straight application band and at substantially the same distance, in particular the same rectilinear distance, from one another.

The packaging machine 1 comprises a sterilizing unit 4 having a sterilizing bath 5, in which a chemical sterilizing agent, such as a hydrogen peroxide solution, is applied to the web 3 of packaging material. The web 3 of packaging material is fed through the sterilizing unit 4 by means of known guiding elements (like for example rollers or similar elements).

The packaging machine 1 further comprises a folding unit 6 arranged downstream of the sterilizing unit 4 along the conveying path P. Folding unit 6 extends substantially vertically along the conveying path P for producing a continuous tube 7. In particular, inside the folding unit 6, the web 3 of packaging material is folded from a continuous planar shape to a continuous tubular shape with a longitudinal axis Y. In particular, the longitudinal axis Y is arranged along a vertical direction.

The folding unit 6 is defined within a fixed structure 8 in which the web 3 of packaging material is maintained in a sterile-air environment. The folding unit 6 further comprises a number of folding devices placed along the conveying path P in succession (one after the other).

More in detail, the folding unit 6 comprises a first (or upper) folding device 9, a second (or intermediate) folding device 10. The folding devices 9, 10 are arranged along the conveying path P in succession (one after the other) carried by the fixed structure 8, and interacting with the web 3 of packaging material to fold the web 3 of packaging material gradually into the tube 7 (cylinder) and superimpose a first lateral portion 3A of the web 3 of packaging material to a second lateral portion 3B of the web 3 of packaging material, opposite to the first lateral portion 3A, to form the continuous tube 7. The second folding device 10 is arranged downstream of the first folding device 9 along the conveying path P. When the web 3 of packaging material is folded from the planar shape to the tubular shape, the first lateral portion 3A partially overlaps the second lateral portion 3B defining an overlapping area OA formed by overlapping the first lateral portion 3A and the second lateral portion 3B.

Advantageously, each of said folding devices 9,10 has a ring-like shape, e.g. at least partially enclosing the web 3 of packaging material. Each folding device 9, 10 comprises a forming ring 9*, 10* surrounding the web 3 of packaging material and supporting a number of rollers 9**, 10** cooperating to fold the web 3 of packaging material.

With particular reference to figures 1 and 2, the first folding device 9 comprises a first folding ring 9* supporting a plurality of first folding rollers 9**, said first folding rollers 9** have respective axes perpendicular to the axis Y. Said first folding rollers 9** have respective lateral surfaces with preferably concave shape (i.e. the first folding rollers 9** have a diameter at the ends that is greater than a diameter at the center). The lateral surfaces of the first folding rollers 9** define a first compulsory passage for the web 3 of packaging material being folded.

Similarly, the second folding device 10 comprises a second folding ring 10* supporting a plurality of second folding rollers 10**, said second folding rollers 10** have respective axes perpendicular to the axis Y. Said second folding rollers 10** have respective lateral surfaces with concave shape (i.e. the second folding rollers 10** have a diameter at the ends that is greater than a diameter at the center). The lateral surfaces of the second folding rollers 10** define a second compulsory passage for the web 3 of packaging material being folded.

The first compulsory passage and the second compulsory passage have both a substantially circular shape but different in section. A gap is defined between the first lateral portion 3A and the second lateral portion 3B which decreases gradually in section along the conveying path P from the first compulsory passage to the second compulsory passage.

Advantageously, the folding rollers 10** comprise at least one folding roller 30, also named mill roller 30, having a number of recesses 31 on the lateral wall thereof; each recess 31 defines a slot 31 configured to be engaged by the opening devices OD. Preferably, mill roller 30 has a plurality of slots 31 on the lateral wall thereof, so as to define an alternation of solids 32 and voids on said lateral wall, each void being defined by one respective slot 31. Each slot 31 is configured to prevent the opening devices OD from colliding with the folding rollers 10** which surround the tube 7.

More in detail, the mill roller 30 defines a toothed wheel comprising a plurality of teeth 32 defining the above-mentioned solids 32. Furthermore, the teeth 32 are configured to selectively mesh with the opening devices OD, so as to drive the toothed wheel in rotation by the movement of the tube 7 through the compulsory passages.

In light of the above, the tube 7 drives, i.e. puts in rotation, the mill roller 30 by means of the opening devices OD engaging respective slots 31 and meshing with respective teeth/solids 32. More specifically, the opening devices OD mesh with respective side portions of teeth/solids 32.

Furthermore, each tooth/solid 32 (in particular its upper surfaces) defines a respective portion of the lateral wall of the mill roller 30 configured to cooperate in contact with the tube 7. Preferably, mill roller 30 is rotatable around a rotation axis B arranged on the same common plane of the rotation axes of the other folding rollers 10** of the folding device 10. Axis B is preferably orthogonal to axis Y.

The alternation of solids 32 and voids, i.e. the alternation of teeth 32 and slots 31, provides for a radial support of the tube 7 and, at the same time, for the free passing of the opening devices OD through the second compulsory passage. In other words, the teeth 32 avoids a deformation, i.e. a bulging/displacement in the radial direction relative to axis Y, of the tube 7 being formed, which deformation could compromise the optimal overlap obtained at the overlapping area AO. At the same time, each slot 31 provides a space for the opening devices OD to freely pass through the compulsory passages, thereby avoiding any collision in the radial direction.

As mentioned above, the opening devices OD push onto the respective tooth 32, putting the wheel in rotation. Hence, advantageously, the mill roller 30 is an idle roller, namely it is passively driven in rotation.

Conveniently, the mill roller 30 comprises a number of slots 31 and teeth 32 and preferably, the slots 31 are equally spaced from one another along lateral wall; hence, teeth 32 are equally spaced from one another along lateral wall. Therefore, the above-mentioned solids/teeth 32 and voids/slots 31 alternate one another at a regular pace.

According to a non-shown embodiment, machine 1 comprises an actuation device (not shown), such as a motor, operatively coupled to the mill roller 30 and configured to selectively control a rotation of the mill roller 30 around axis B.

The alternation of solids and voids, i.e. of teeth of slots 31 and teeth, provides for a radial support of the web 3 of packaging material and, at the same time, for the free passing of the opening devices OD through a self-synchronizing meshing.

The packaging machine 1 further comprises a forming device 21 arranged upstream of the folding device 6 along the conveying path P. In particular, inside the forming device 21, the web 3 of packaging material is folded from a continuous planar shape to a substantial continuous C-shape. The forming device 21 is defined within the fixed structure 8. The web 3 of packaging material has a substantially C-shape at the forming device 21 and a substantially circular shape at the folding devices 9, 10.

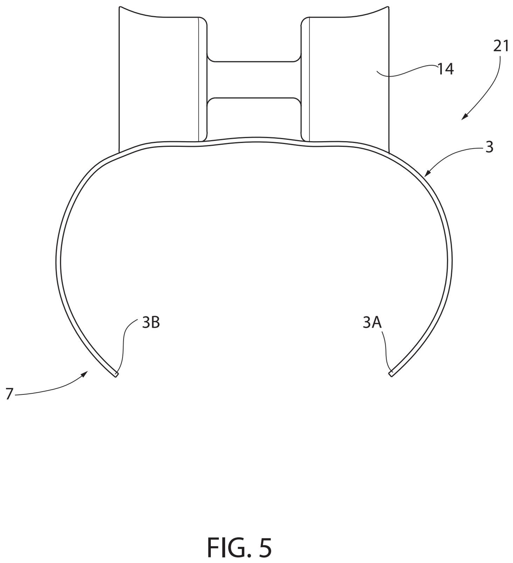

According to figures 1 and 5, the forming device 21 has a ring-like shape, e.g. at least partially enclosing the web 3 of packaging material and comprises a forming ring surrounding the web 3 of packaging material and supporting a number of rollers cooperating to fold the web 3 of packaging material.

The packaging machine 1 further comprises a back roller 14 configured to contact the web 3 of packaging material thereby adjusting a dimension of the tube 7. In particular, the back roller 14 is configured to contact a substantially planar (straight) portion of the web 3 of packaging material. Advantageously, the back roller 14 is motorized. The back roller 14 is arranged immediately downstream of the forming device 21 along the conveying path P. The back roller 14 is arranged upstream of the folding unit 6.

More in detail, the back roller 14 is arranged in a position of the conveying path P wherein the first lateral portion 3A does not yet overlap the second lateral portion 3B, i.e. the back roller 14 is arranged in a position of the conveying path P wherein the overlapping area OA is not yet defined. The back roller 14 is arranged before the first lateral portion 3A being partially placed on top of the second lateral portion 3B.

The back roller 14 is moved away from or towards the web 3 of packaging material to adjust the dimension of the tube 7. In principle, a diameter D of the tube 7 is increased by moving the back roller 14 away from the tube 7. The diameter D of the tube 7 is reduced by moving the back roller 14 towards the tube 7.

The width of the overlapping area OA of the tube 7 is increased by moving the back roller 14 towards the tube 7. The width of the overlapping area OA is reduced by moving the back roller 14 away from the tube 7.

Packaging machine 1 comprises a sealing unit 11 (of the known type and not described in detail) for sealing the overlapping first lateral portion 3A and second lateral portion 3B to obtain a fluid-tight longitudinal seal in tube 7.

Tube 7 is continuously filled with the pourable food product through a filling device 12 comprising a pour conduit, which partially extends inside the tube 7.

Tube 7 is sent to a transverse forming and sealing unit (not shown), in which the tube 7 is gripped to transversely seal the tube 7 and form pillow packs 13. Finally, the pillow packs 13 are subjected to successive mechanical folding operations to obtain the finished sealed packages.

Finally, packaging machine 1 comprises a control apparatus CA aimed at controlling a dimension of the tube 7.

The control apparatus CA comprises an imaging device 17 disclosed in figure 2. The imaging device 17 comprises at least a (first) sensor 18, adapted to frame at least a longitudinal portion of the tube 7. Advantageously, the sensor 18 is contactless. Sensor 18 is preferably a camera 18A. Imagining device 17 is arranged downstream of the folding unit 6. Advantageously, the imaging device 17 is arranged downstream of the sealing unit 11. Advantageously, the imaging device 17 is arranged outside of the sterilizing unit 4.

Sensor 18, i.e. the camera 18A, is adapted to frame a longitudinal portion of the sealed tube 7. In a preliminary set-up and design phase of a working cycle of the packaging machine 1, a preset value PW_{OA} of a width of the overlapping area OA is defined. In other words, the preset value is a preferred value, or an optimal value, corresponding to the correct working condition of the packaging machine 1. The preset value PW_{OA} of a width of the overlapping area OA could be acquired or, alternatively, calculated. The control apparatus CA comprises a detection device 15 disclosed in figure 2. Detection device 15 comprises at least a (second) sensor 16, adapted to detect a parameter of the web 3 of packaging material, in particular a width of the web 3 of packaging material. Advantageously, the sensor 16 is an edge sensor or a code reader or a camera. Alternatively, the parameter of the web 3 of packaging material is known because measured during the manufacturing or the reel 2.

Advantageously, detection device 15 is arranged upstream of the forming device 21. More in detail, detection device 15 is arranged upstream of the sterilizing unit 4. Detection device 15 is arranged in a position of the conveying path P wherein the overlapping area OA is not yet defined (i.e. wherein the first lateral portion 3A does not yet overlap the second lateral portion 3B). Detection device 15 is configured to measure a parameter of the web 3 of packaging material when the packaging material has a planar shape. Sensor 16, i.e. the edge sensor 16, is adapted to measure a width of the web 3 of packaging material.

The control apparatus CA also comprises a control unit 19 which is connected both to the imaging device 17 and to the detection device 15. The control unit 19 comprises one or more memories; said memories can be loaded with a computer program with software code portions comprising instructions which, when executed, cause the control unit 19 to perform the steps of the method described hereinafter. The control apparatus CA further comprises a human-machine interface 20 connected to the control unit 19.

Imagining device 17 is designed for generating and transmitting to control unit 19 a sensor signal indicative of a longitudinal portion of the (sealed) tube 7. Advantageously, the imaging device 17 is designed for generating and transmitting to the control unit 19 a continuous sensor signal indicative of a longitudinal portion of the (sealed) tube 7, thereby providing a real-time and continuous check on the quality of the tube 7. In other words, sensor 18 is adapted to continuously acquire images of at least a longitudinal portion of the (sealed) tube 7.

Control unit 19 calculates an overlap width OW of the overlapping area OA based on the sensor signal coming from the imaging device 17. A method to calculate the overlap width OW based on the sensor signal coming from the imaging device 17 is disclosed for example in the documents EP4335757 and EP4335758, herewith incorporated by reference. Advantageously, the sensor signal coming from the imaging device 17 comprises an image of the longitudinal portion of the tube 7 of packaging material.

Detection device 15 is designed for generating and transmitting to control unit 19 a sensor signal indicative of the web width WW of the web 3 of packaging material. For example, the detection device 15 may be configured to transmit the sensor signal as a result of a splicing event occurring. In particular, the splicing event occurs when a web 3 of packaging material from a first reel 2 is attached to a web 3 of packaging material from a second reel 2.

A nominal web width WW_{NOM} is defined in a preliminary set-up and design phase of a working cycle of the packaging machine 1. The nominal web width WW_{NOM} is a preferred or an optimal value of the web width for the web 3 of packaging material corresponding to a predetermined working condition of the packaging machine 1. In particular, the nominal web width WW_{NOM} corresponds to a predetermined operating position of the back roller 14.

A (first) tolerance range of the web width WW is also defined in a preliminary set-up and design phase of a working cycle of the packaging machine 1. The tolerance range delimits a range of acceptable values of the web width WW. The tolerance range of the web width WW is delimited by a minimum threshold value WW_{MIN} and a maximum threshold value WW_{MAX} of the web width WW. Advantageously, the tolerance range of the web width WW is defined in a neighborhood of the nominal web width WW_{NOM}. More in detail, according to a preferred embodiment, the tolerance range of the web width WW is defined as WW_{NOM} ± 1 mm; in other words, the minimum threshold value WW_{MIN} corresponds to the nominal web width WW_{NOM} - 1 mm and the maximum threshold value WW_{MAX} corresponds to the nominal web width WW_{NOM} + 1 mm.

Control unit 19 is configured to check whether the web width WW is smaller than or equal to the maximum threshold value WW_{MAX} and to check whether the web width WW is greater than or equal to the minimum threshold value WW_{MIN}. In case the web width WW is not comprised within the (first) tolerance range, the control unit 19 is configured to transmit a warning signal to the human-machine interface 20.

The control unit 19 is further configured to adjust a dimension of the tube 7 based on the web width WW. In particular, control unit 19 is configured to adjust the position of the back roller 14 based on the web width WW. In particular, thanks to the adjustment of the position of the back roller 14, the diameter D of the tube 7 is substantially maintained even (constant) in case of variation of the web width WW.

In particular, in case the web width WW is greater than the nominal web width WW_{NOM} (i.e. comprised in the range between the nominal web width WW_{NOM} and the maximum threshold value WW_{MAX}) the back roller 14 is moved towards the web 3 of packaging material to adjust the dimension of the overlapping area OA. This way, the diameter D is substantially maintained constant. Consequently, the width of the overlapping area OA is increased. On the contrary, in case the web width WW is smaller than the nominal web width WW_{NOM} (i.e. comprised in the range between the nominal web width WW_{NOM} and the minimum threshold value WW_{MIN}) the back roller 14 is moved away from the web 3 of packaging material to adjust the dimension of the overlapping area OA. This way, the diameter D is substantially maintained constant. Consequently, the width of the overlapping area OA is reduced.

A detachment or alternatively an excessive load of the tube 7 at the mill roller 30 would introduce an undesired desynchronization of the mill roller 30 with the opening devices OD.

The control unit 19 may be further configured to adjust the dimension of the overlapping area OA based also on the (calculated) overlap width OW. Advantageously, this adjustment is based both on a real value of the overlap width OW and on a predetermined value. In particular, control unit 19 is configured to adjust the dimension of the overlapping area OA based on both the (calculated) overlap width OW and the web width WW.

Control unit 19 is further configured to calculate a setpoint overlap value. The setpoint overlap value is indicative of a desired overlap width. The setpoint overlap value is calculated based on the web width WW. In other words, the setpoint overlap value is determined as a function of the web width WW. The setpoint overlap value is further calculated based on a nominal set point overlap value.

The nominal set point overlap value is defined in a preliminary set-up and design phase of a working cycle of the packaging machine 1. The nominal set point overlap value is a preferred or an optimal value corresponding to a predetermined working condition of the packaging machine 1 using a web 3 of packaging material having the nominal web width WW_{NOM}. For example, if the nominal web width WW_{NOM} is 292 mm, the nominal set point overlap value is 6 mm for a certain type of packages.

The setpoint overlap value is determined by control unit 19 to avoid desynchronization of the mill roller 30 with the opening devices OD. In particular, the setpoint overlap value is determined considering the interaction between the mill roller 30 and the tube 7. More in detail, the setpoint overlap value is determined to guarantee the contact (pressure load) of the mill roller 30 with the tube 7. The setpoint overlap value allows the mill roller 30 to be passively driven in rotation by the tube 7 and, at the same time, allows the mill roller 30 to provide for a radial support of the tube 7 without interference with the opening devices OD. In particular, the setpoint overlap value is calculated based on the nominal set point overlap value and the web width WW.

Control unit 19 is configured to adjust the dimension of the overlapping area OA based on the (calculated) overlap width OW and the setpoint overlap value.

A (second) safety range of the overlap width OW is also defined in a preliminary set-up and design phase of a working cycle of the packaging machine 1. The safety range delimits a range of acceptable values of the overlap width OW allowing a correct working condition of the packaging machine 1, i.e. the safety range is determined to avoid compromising the food safety within the tube 7 and/or to avoid the risk of a faulty closure of the tube 7. The safety range of the overlap width OW is delimited by a minimum threshold value OW_{MIN} and a maximum threshold value OW_{MAX} of the overlap width OW.

Control unit 19 is configured to check whether the calculated overlap setpoint value is smaller than or equal to the maximum threshold value OW_{MAX} and to check whether the overlap width OW is greater than or equal to the minimum threshold value OW_{MIN}.

In case the setpoint overlap value is not comprised within the safety range, the control unit 19 is configured to limit the setpoint overlap value within the safety range.

### LIST OF REFERENCE NUMBERS

- 1: packaging machine
- 2: reel
- 3: web of packaging material
- 4: sterilizing unit
- 5: sterilizing bath
- 6: folding unit
- 7: tube
- 8: structure
- 9: folding device
- 9*: forming ring
- 9**: rollers
- 10: folding device
- 10*: forming ring
- 10**: rollers
- 11: sealing unit
- 12: filling device
- 13: pillow pack
- 14: back roller
- 15: detection device
- 16: sensor
- 17: imaging device
- 18: sensor
- 19: control unit
- 20: human-machine interface
- 21: forming device
- 30: mill roller
- 31: recess - slot
- 32: solid - tooth
- P: conveying path
- Y: axis
- AO: overlapping area
- CA: control apparatus
- OD: opening devices
- B: axis
- D: diameter
- WW: web width
- WW_{MIN}: minimum threshold value
- WW_{MAX}: maximum threshold value
- OW: overlap width
- OW_{MIN}: minimum threshold value
- OW_{MAX}: maximum threshold value

## Claims

1. A method for producing sealed packages from a web (3) of packaging material gradually folded and sealed into a tube (7) fed along a conveying path (P); the method comprises the steps of:
- receiving a web width (WW) indicative of a width of the web (3) of packaging material;
- receiving an overlap width (OW) indicative of a width of an overlapping area (OA) of the tube (7) of packaging material; wherein the overlapping area (OA) comprises an area wherein a first edge (3A) of the web (3) of packaging material partially overlaps a second edge (3B) of the web (3) of packaging material; and
- adjusting a dimension of the overlapping area (OA) based on both the web width (WW) and the overlap width (OW).

2. The method according to claim 1, wherein the step of adjusting comprises adjusting a diameter (D) of the tube (7) of packaging material based on both the web width (WW) and the overlap width (OW).

3. The method according to claim 1 or claim 2 and comprising the further step of receiving a sensor signal indicative of the web width (WW), preferably from an edge sensor (16) and/or a code reader.

4. The method according to anyone of the previous claims and comprising the further step of:
- receiving a sensor signal indicative of a portion of the tube (7) exhibiting the overlapping area (OA); preferably the sensor signal comprises an image acquired by a camera (18);
- calculating the overlap width (OW) based on said sensor signal indicative of a portion of the tube (7); and
- adjusting the dimension of the overlapping area (OA) based on the calculated overlap width (OW).

5. The method according to the preceding claim, wherein the step of receiving the sensor signal indicative of the portion of the tube (7) comprises receiving a continuous signal indicative of the overlap width (OW).

6. The method according to any of the previous claims and comprising the further steps of:
- calculating a setpoint overlap value, indicative of a desired overlap width, as a function of the web width (WW); and
- adjusting the dimension of the overlapping area (OA) based on the calculated overlap width (OW) and the setpoint overlap value.

7. The method according to the preceding claim and comprising the further step of calculating the setpoint overlap value such as to guarantee the contact (pressure load) of a mill roller (30) with the tube (7), the mill roller (30) being a roller arranged along the conveying path (P) which provides for a radial support of the tube (7) and is passively driven in rotation by the tube (7).

8. The method according to anyone of the previous claims and comprising the further steps of:
- receiving a safety range (SR) for the dimension of the overlapping area (OA); and
- adjusting the dimension of the overlapping area (OA) also based on said safety range (SR).

9. The method according to the preceding claim and comprising the further step of limiting the overlapping area (OA) within said safety range (SR).

10. The method according to anyone of the previous claims and comprising the further step of adjusting the dimension of the overlapping area (OA) by modifying a position of a motorized roller (14) configured for contacting and shaping the tube (7).

11. The method according to the preceding claim and comprising the further step of adjusting the dimension of the overlapping area (OA) by moving the motorized roller (14) away from or towards the tube (7).

12. Computer program product loadable in one or more memories of at least one control unit (19) and comprising software code portions comprising instructions which, when executed, cause the at least one control unit (19) to perform the steps of the method according to any one of the preceding claims.

13. A packaging machine (1) for producing sealed packages from a web (3) of packaging material gradually folded and sealed into a tube (7) fed along a conveying path (P); the packaging machine (1) comprises a control apparatus (CA) with:
- a first sensor (15) configured to receive a web width (WW) of the web (3) of packaging material and to generate a signal;
- a second sensor (17) configured to acquire an overlap width (OW) indicative of a width of an overlapping area (OA) of the tube (7); wherein the overlapping area (OA) comprises an area wherein a first edge (3A) of the web (3) of packaging material partially overlaps a second edge (3B) of the web (3) of packaging material and to generate a signal; and
- a control unit (19) connected to both the first sensor (15) and the second sensor (17) and configured to control a dimension of the overlapping area (OA), based on the signals coming from the first sensor (15) and the second sensor (17).

14. The packaging machine according to the preceding claim, wherein the first sensor (15) is an edge sensor (15) or a code reader.

15. The packaging machine according to claim 13 or claim 14, wherein the second sensor (17) is an imaging device (17) with at least a camera (18) configured to acquire an image of at least a longitudinal portion of the tube (7) exhibiting the overlapping area (OA).
